# EUROPEAN PATENT APPLICATION

(11) **EP 4 181 234 A1**
(43) Date of publication of application: **17.05.2023**
(21) Application number: 22207356.1
(22) Date of filing: 14.11.2022
(51) Int. Cl.: H01M 4/36, H01M 4/505, H01M 4/525, H01M 10/0525, H01M 10/0562, H01M 4/02, H01M 4/38

(54) **CATHODE ACTIVE MATERIAL FOR SULFIDE-BASED ALL-SOLID-STATE BATTERY, METHOD OF PREPARING THE SAME, CATHODE COMPLEX INCLUDING THE SAME AND METHOD OF FABRICATING THE CATHODE COMPLEX**

(30) Priority: 15.11.2021 KR 20210156511
(71) Applicant: SK Innovation Co., Ltd., Seoul 03188 (KR); SK On Co., Ltd., Seoul 03161 (KR)
(72) Inventor: PARK, Sang Min, 34124 Daejeon (KR); KWEON, Hee Jun, 34124 Daejeon (KR); KIM, Sang Bok, 34124 Daejeon (KR); LEE, Tae Kyoung, 34124 Daejeon (KR); CHOI, Ji Hoon, 34124 Daejeon (KR)
(74) Representative: Stolmár & Partner Patentanwälte PartG mbB

(57) **Abstract**

A cathode active material for a sulfide-based all-solid-state battery according to embodiments of the present invention includes a first lithium-transition metal composite oxide particle having a secondary particle structure that includes a plurality of primary particles therein. The first lithium-transition metal composite oxide particle includes a lithium-sulfur-containing portion formed between the primary particles.

## Description

### BACKGROUND

### 1. Field

The present invention relates to a cathode active material for a sulfide-based all-solid-state battery, a method of preparing the same, a cathode complex including the same, and a method of fabricating the cathode complex.

### 2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, the secondary battery or a battery pack including the same is being developed and applied as an ecofriendly power source of an electric automobile such as a hybrid vehicle.

The secondary battery includes, e.g., a lithium secondary battery, a nickel-cadmium battery, a nickel-hydrogen battery, etc. The lithium secondary battery is highlighted due to high operational voltage and energy density per unit weight, a high charging rate, a compact dimension, etc.

In a currently commercial lithium secondary battery, a liquid electrolyte is mainly used, and safety issues such as leakage, explosion and ignition may occur due to a rapid environmental change such as a temperature change and an external shock. Accordingly, researches for solidifying the electrolyte are being progressed to secure safety while improving an energy density.

The solid electrolyte used in an all-solid-state battery may include an inorganic solid electrolyte (sulfide-based, oxide-based) and an organic solid electrolyte (polymer), and the sulfide-based solid electrolyte may provide high ionic conductivity and battery cell performance.

However, the sulfide-based solid electrolyte may be in a physical contact with a cathode electrode active material. Accordingly, diffusivity of lithium ions may become lower than that in the liquid electrolyte, and thus rate properties may be degraded. For example, a side reaction may be caused by mutual diffusion of a sulfur (S) component of the solid electrolyte and a transition metal component in the cathode electrode active material, thereby increasing an interfacial resistance.

### SUMMARY

According to an aspect of the present invention, there is provided a cathode active material for an all-solid-state battery having improved lithium ion conductivity and electrochemical property.

According to an aspect of the present invention, there is provided a method of preparing a cathode active material for an all-solid-state battery having improved lithium ion conductivity and electrochemical property.

According to an aspect of the present invention, there is provided a cathode complex for an all-solid-state battery having improved lithium ion conductivity and electrochemical property.

According to an aspect of the present invention, there is provided a method of fabricating a cathode complex for an all-solid-state battery having improved lithium ion conductivity and electrochemical property.

A cathode active material for a sulfide-based all-solid-state battery includes a first lithium-transition metal composite oxide particle having a secondary particle structure that includes a plurality of primary particles therein. The first lithium-transition metal composite oxide particle includes a lithium-sulfur-containing portion formed between the primary particles.

In some embodiments, the lithium-sulfur-containing portion may be also formed on an outer surface portion of the secondary particle structure of the first lithium-transition metal composite oxide particle.

In some embodiments, the primary particles may be represented by Chemical Formula 1.

[Chemical Formula 1] LiₐNi_{b}M_{1-b}O₂

In Chemical Formula 1, 0.95 ≤ a ≤ 1.08, 0.5 ≤ b ≤ 1, and M includes at least one element selected from Na, Mg, Ca, Y, Ti, Zr, Hf, V, Nb, Ta, Cr, Mo, W, Mn, Co , Fe, Cu, Ag, Zn, B, Al, Ga, C, Si, Sn, Ba and Zr.

In some embodiments, the lithium-sulfur-containing portion may include a lithium-sulfur compound represented by Chemical Formula 2.

[Chemical Formula 2] Li_{c}X_{d}SO₄

In Chemical Formula 2, 0.95≤c≤2, 0≤d≤1, and X includes Na or K.

In some embodiments, the cathode active material may further include a second lithium-transition metal composite oxide particle having a single-particle structure.

In some embodiments, the lithium-sulfur-containing portion may also be formed on a surface of the second lithium-transition metal composite oxide particle.

In some embodiments, a peak of the lithium-sulfur-containing portion of the first lithium-transition metal composite oxide particle measured by an X-ray diffraction (XRD) analysis may be detected at a diffraction angle in a range from 20° to 30°.

In some embodiments, a sulfur content of the first lithium-transition metal composite oxide particle measured by a CS (carbon-sulfur) analyzer may be in a range from 3,000 ppm to 4,000 ppm relative to a total weight of the first lithium-transition metal composite oxide particle.

In some embodiments, a total content of lithium carbonate (Li₂CO₃) and lithium hydroxide (LiOH) remaining on a surface of the first lithium-transition metal composite oxide particle may be 5,000 ppm or less.

In a method of fabricating a cathode active material for a sulfide-based all-solid-state battery, preliminary lithium-transition metal composite oxide particles are prepared by reacting a transition metal precursor and a lithium precursor. The preliminary lithium-transition metal composite oxide particles are mixed with a sulfur compound aqueous solution. The mixed preliminary lithium-transition metal composite oxide particles and the sulfur compound aqueous solution are heat-treated to form lithium-transition metal composite oxide particles that includes a lithium-sulfur-containing portion. The lithium-transition metal composite oxide particles have a secondary particle structure that includes a plurality of primary particles combined therein, and the lithium-sulfur-containing portion is formed between the primary particles.

In some embodiments, the sulfur compound aqueous solution may include a solvent and a sulfur compound powder mixed in the solvent, and an amount of the sulfur compound powder may be in a range from 0.1 wt% to 3 wt% based on a total weight of the preliminary lithium-transition metal composite oxide particles.

In some embodiments, an amount of the solvent may be in a range from 2 wt% to 20 wt% based on the total weight of the preliminary lithium- transition metal composite oxide particles.

In some embodiments, the sulfur compound powder may include at least one selected from sodium hydrogen sulfate, potassium hydrogen sulfate and ammonium sulfate.

In some embodiments, the heat-treating may be performed at a temperature ranging from 200 °C to 500 °C under an oxygen atmosphere.

In some embodiments, the preliminary lithium-transition metal composite oxide particles may be mixed with the sulfur compound aqueous solution without washing with water.

A cathode complex includes the cathode active material for a sulfide-based all-solid-state battery according to embodiments as described above, a sulfide-based solid electrolyte and a conductive material.

In some embodiments, a ratio of an average value of a sulfur signal of the lithium-sulfur-containing portion measured by an Energy Dispersive Spectroscopy (EDS) relative to an average value of a sulfur signal of the solid electrolyte measured by the EDS may be in a range from 0.4 to 0.5.

In a method of fabricating a cathode complex, a cathode active material for a sulfide-based all-solid-state battery fabricated according to embodiments as described above is prepared. A preliminary cathode complex is prepared by dry-mixing the cathode active material for a sulfide-based all-solid-state battery, a sulfide-based solid electrolyte and a conductive material. The preliminary cathode complex is pressed to form a cathode complex.

In some embodiments, the sulfide-based solid electrolyte may be represented by Chemical Formula 3.

[Chemical Formula 3] LiₑY_{f}P_{g}SₕZᵢ

In Chemical Formula 3, 0<e<12, 0≤f≤6, 0≤g≤6, 0≤h≤12 and 0≤i≤9, and Y includes at least one element selected from B, Al, Ga, In, Si, Ge, Sn , Pb, As, Sb, Bi, Ti, V, Cr, Mn, Fe, Co, Ni, Cu, Y, Zr, Nb, Mo, Tc, Ru, Rh, Pd, Ag, Hf, Ta and W. Z includes at least one element selected from F, Cl, Br and I.

In some embodiments, the pressing may include an isotropic pressing performed at a pressure in a range from 200 MPa to 800 MPa for 10 seconds to 1 minute.

A cathode active material according to embodiments of the present invention may include lithium-transition metal composite oxide particles having a secondary particle structure that includes a plurality of primary particles therein. The lithium-transition metal composite oxide particle may include a lithium-sulfur-containing portion formed between the primary particles.

In exemplary embodiments, a residual lithium remaining on an outer surface of the lithium-transition metal composite oxide particle having the secondary particle structure may be converted into the lithium-sulfur-containing portion by being reacted with a sulfur-containing compound. Accordingly, sulfur atoms may not diffuse into the secondary particle, and a sulfur content on the outer surface of the secondary particle may be increased.

The cathode active material according to the embodiments of the present invention may be applied to a sulfide-based solid electrolyte to reduce an interfacial resistance between the cathode active material and the electrolyte, thereby reducing a electrochemical potential difference.

Therefore, a low lithium ion diffusion in a conventional all-solid-state battery may be enhanced. Further, rate properties of the battery may also be improved by enhanced lithium ion conductivity.

### BRIEF DESCRIPTION OF THE DRAWINGS

FIG. 1 is a process flow diagram for describing a method of preparing a cathode active material in accordance with exemplary embodiments.
FIG. 2 is a schematic cross-sectional view illustrating a cathode complex in accordance with exemplary embodiments.
FIG. 3 is a process flow diagram for describing a method of fabricating a cathode complex in accordance with exemplary embodiments.
FIG. 4 is a graph showing results of XRD analysis of lithium-transition metal composite oxide particles according to Example 1 and Comparative Example 1.
FIG. 5A is a partial SEM image of a first lithium-transition metal composite oxide particle according to Example 1.
FIG. 5B is a graph showing an EDS line profile of a first lithium-transition metal composite oxide particle according to Example 1.
FIG. 6 is a graph showing lithium ion conductivities of first lithium-transition metal composite oxide particles according to Examples 4 to 8.
FIG. 7 is a graph showing rate properties of lithium-transition metal composite oxide particles according to Examples 1 to 3 and Comparative Examples 1 to 3.

### DETAILED DESCRIPTION OF THE EMBODIMENTS

According to embodiments of the present invention, a cathode active material for a sulfide-based all-solid-state battery, a method of preparing the same, a cathode complex including the same, and a method of fabricating the cathode complex are provided.

Hereinafter, embodiments of the present invention will be described in detail with reference to experiment examples and drawings. However, the embodiments disclosed herein are exemplary and the present invention is not limited to a specific embodiment.

In disclosures of the present specification, the cathode active material may have a morphological shape of a single particle, a primary particle or a secondary particle.

The term "single particle" herein may be used in a comparative meaning to a secondary particle in which tens of primary particles or hundreds of primary particles are assembled, and may refer to a cathode active material particle composed of 10 or less primary particles. The single particle may have a single crystal or polycrystalline structure in a crystallographic aspect

The term "primary particle" refers to a primary structure of a single particle, and the term "secondary particle" refers to a secondary structure in which primary particles are aggregated by chemical or physical bonding.

The cathode active material for a sulfide-based all-solid-state battery according to exemplary embodiments may include a first lithium-transition metal composite oxide particle having a secondary particle structure including a plurality of primary particles therein. The first lithium-transition metal composite oxide particle may include a lithium-sulfur-containing portion formed between the primary particles. The cathode active material may include a plurality of the first lithium-transition metal composite oxide particles.

In some embodiments, the lithium-sulfur-containing portion may be formed on an outer surface of the secondary particle structure of the first lithium-transition metal composite oxide particle.

For example, the lithium-sulfur-containing portion may form a coating portion on the outer surface of the first lithium-transition metal composite oxide particle having the secondary particle structure. The lithium-sulfur-containing portion may also be formed between the primary particles present within an inner region of the lithium-transition metal composite oxide particle having the secondary particle structure.

Sulfur present in a solid electrolyte may react with a moisture remaining in the lithium-transition metal composite oxide particle to penetrate into the lithium-transition metal composite oxide particle to elute lithium. The lithium-sulfur-containing portion may block or prevent the above-described lithium elution. Accordingly, an increase of a chemical potential barrier caused by lithium eluted from the cathode active material included in the all-solid-state battery may be prevented.

In some embodiments, the primary particle may include a compound represented by Chemical Formula 1. For example, the primary particle may have a chemical structure or a crystal structure represented by Chemical Formula 1 below.

[Chemical Formula 1] LiₐNi_{b}M_{1-b}O₂

In Chemical Formula 1, 0.95≤a≤1.08, 0.5≤b≤1, M includes at least one element selected from Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba or Zr.

For example, the primary particles may include nickel (Ni), and may further include at least one of cobalt (Co) and manganese (Mn).

In some preferable embodiments, a molar ratio or a concentration of Ni represented as b in Chemical Formula 1 may be 0.8 or more.

For example, when a high-Ni composition having b of 0.8 or more is employed, calcination of the lithium-transition metal composite oxide particles may be performed at a relatively low temperature. Accordingly, an amount of a residual lithium produced on the surface of the lithium-transition metal composite oxide particles may be increased.

A water-washing process or a non-water washing process (e.g., an initial wetting method) for removing the residual lithium may be performed. Thus, when b is 0.8 or more, the above process for removing the residual lithium may be substantially meaningful.

Ni may serve as a transition metal related to power and capacity of the lithium secondary battery. Therefore, as described above, the high-Ni composition may be employed to the lithium-transition metal composite oxide particles, so that a high-power cathode and a high-power lithium secondary battery may be provided.

However, as the content of Ni increases, long-term storage and life-span stability of the cathode or the secondary battery may be relatively deteriorated. However, according to exemplary embodiments, life-span stability and capacity retention may be improved using Mn while maintaining an electrical conductivity by Co.

In some embodiments, the lithium-sulfur containing portion may include a lithium-sulfur compound represented by Chemical Formula 2. For example, the lithium-sulfur-containing portion may include a chemical structure or a crystal structure represented by Chemical Formula 2.

[Chemical Formula 2] Li_{c}X_{d}SO₄

In Chemical Formula 2, 0.95≤c≤2, 0≤d≤1, and X may be Na or K.

In some embodiments, the lithium-sulfur compound may include lithium-sulfur (Li-S), lithium-potassium-sulfur (Li-K-S), and/or lithium-sodium-sulfur (Li-Na-S). For example, the lithium-sulfur compound may include Li₂SO₄, LiKSO₄, LiNaSO₄, etc. These may be used alone or in a combination thereof.

In some embodiments, the first lithium-transition metal composite oxide particle may have a peak value at a diffraction angle (θ) 20° to 30° in an X-ray diffraction (XRD) analysis by the lithium-sulfur-containing portion.

The lithium-sulfur-containing portion may be formed in a region between the primary particles of the first lithium-transition metal composite oxide particle, and thus sulfur may not be diffused into the cathode active material particle, and a content of sulfur present on the surface of the cathode active material may be increased. Thus, the ionic conductivity may be improved by reducing a electrochemical potential barrier at the electrolyte interface. Accordingly, lithium ion diffusion (Lidiffusion) may be improved and rate properties of the battery may also be improved.

In some embodiments, the first lithium-transition metal composite oxide particles and the primary particles present on the surface thereof may have a hexagonal close-packed structure. Accordingly, a large amount of lithium and transition metal elements may be included in a stable layered structure even in a small space, so that capacity of the secondary battery may be improved.

In an embodiment, the cathode active material for a sulfide-based all-solid-state battery may further include a second lithium-transition metal composite oxide particle having a single-particle structure. A lithium-sulfur compound-containing portion may be formed on a surface of the second lithium-transition metal composite oxide particle having the single-particle structure.

The first lithium-transition metal composite oxide particles having the secondary particle structure may be used together with the second lithium-transition metal composite oxide particles having a single particle structure, thereby reducing a specific surface area of the active material. Thus, deterioration of the cathode active material due to the generation of gas and cracks according to repetition of life-cycle may be prevented, so that life-span stability of the secondary battery may be improved.

In an embodiment, a sulfur content in the first lithium-transition metal composite oxide particles may be in a range from 3,000 to 4,000 ppm based on a total weight of the first lithium-transition metal composite oxide particles. Within the above range, the residual lithium may be sufficiently removed together with a sulfur compound to be described later, while preventing capacity degradation due to an excessive sulfur addition.

For example, the lithium-sulfur compound present on the surface of the first lithium-transition metal composite oxide particle may protect the particle surface from the solid electrolyte and may lower the interfacial resistance between the solid electrolyte and the particle surface to promote a lithium ion mobility. Accordingly, power of the secondary battery may be maintained while improving the capacity retention of the secondary battery.

For example, the sulfur content may be measured through a CS analyzer (carbon-sulfur analyzer).

In some embodiments, a content of a lithium precursor remaining on the surface of the first lithium-transition metal composite oxide particle may be adjusted.

In an embodiment, a total content of lithium carbonate (Li₂CO₃) and lithium hydroxide (LiOH) remaining on the surface of the first lithium-transition metal composite oxide particle may be 5,000 ppm or less. For example, a content of lithium carbonate (Li₂CO₃) remaining on the surface of the first lithium-transition metal composite oxide particle may be 2,500 ppm or less, and a content of lithium hydroxide (LiOH) remaining on the surface of the first lithium-transition metal composite oxide particle may be 2,500 ppm or less.

Within the above range, resistance may be reduced during the movement of lithium ions, so that initial capacity and power properties of the lithium secondary battery may be improved, and life-span properties during repeated charging and discharging may be improved.

In some embodiments, sulfur concentrations in the lithium-sulfur-containing portion of the first lithium-transition metal composite oxide particle and in the solid electrolyte may be measured by an Energy Dispersive Spectroscopy (EDS).

An interface between the solid electrolyte and the first lithium-transition metal composite oxide particle may be predicted using an average value of sulfur signals of the solid electrolyte and the cathode active material measured through the EDS. For example, a content distribution of nickel or sulfur at the interface may change drastically.

In an embodiment, the sulfur concentration of the lithium-sulfur-containing portion measured by the EDS may be smaller than the sulfur concentration in the solid electrolyte measured by the EDS. For example, the average value of the sulfur signal from the lithium-sulfur-containing portion may be from 0.4 to 0.5 relative to the average value of the sulfur signal from the solid electrolyte.

For example, the lithium-sulfur-containing portion may be formed on the surface of the first lithium-transition metal composite oxide particle, so that a concentration gradient may be formed throughout the solid electrolyte and the lithium-sulfur-containing portion without a drastic change of the sulfur concentration.

Within the ratio range of the average value of the sulfur signal of the lithium-sulfur-containing portion, the lithium-sulfur-containing portion having a hexagonal close-packed structure may be sufficiently formed between the primary particles included in the first lithium-transition metal composite oxide particles.

Accordingly, the surface of the primary particles may be protected by the lithium-sulfur-containing portion having the same hexagonal close-packed structure, thereby reducing an area of the primary particles exposed to the electrolyte. Thus, life-span properties of the secondary battery may be improved. Additionally, the residual lithium on the surface of the first lithium-transition metal composite oxide particles may be sufficiently removed to improve electrochemical properties of the secondary battery.

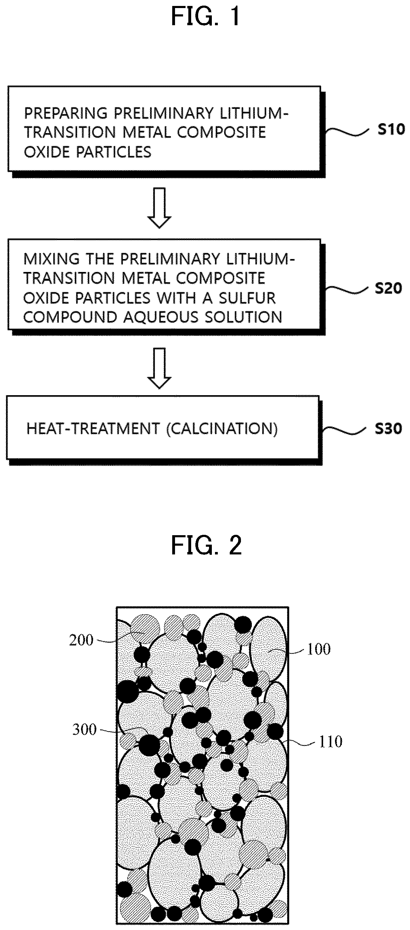

FIG. 1 is a process flow diagram for describing a method of preparing a cathode active material for a sulfide-based all-solid-state battery in accordance with exemplary embodiments.

Referring to FIG. 1, a preliminary lithium-transition metal composite oxide particle may be prepared (e.g., in a step S10).

For example, a transition metal precursor may be mixed with a lithium precursor to form the preliminary lithium-transition metal composite oxide particle. The transition metal precursor (e.g., a Ni-Co-Mn precursor) may be prepared through a co-precipitation reaction.

For example, the transition metal precursor may be prepared through a co-precipitation reaction of metal salts. The metal salts may include a nickel salt, a manganese salt and a cobalt salt.

Examples of the nickel salt include nickel sulfate, nickel hydroxide, nickel nitrate, nickel acetate, and a hydrate thereof. Examples of the manganese salt include manganese sulfate, manganese acetate, and a hydrate thereof. Examples of the cobalt salt include cobalt sulfate, cobalt nitrate, cobalt carbonate, and a hydrate thereof.

An aqueous solution may be prepared by mixing the metal salts with a precipitating agent and/or a chelating agent at a ratio satisfying the content or concentration ratio of each metal described with reference to Chemical Formula 1 above. The transition metal precursor may be prepared by coprecipitating the aqueous solution in a reactor.

The precipitating agent may include an alkaline compound such as sodium hydroxide (NaOH), sodium carbonate (Na₂CO₃), etc. The chelating agent may include, e.g., aqueous ammonia (e.g., NH₃H₂O), ammonium carbonate (e.g., NH₃HCO₃), etc.

A temperature of the co-precipitation reaction may be controlled, e.g., in a range from about 40°C to 60°C. A reaction time may be adjusted in a range from about 24 to 72 hours.

The lithium precursor may include, e.g., lithium carbonate, lithium nitrate, lithium acetate, lithium oxide, lithium hydroxide, etc. These may be used alone or in combination thereof.

In exemplary embodiments, the preliminary lithium-transition metal composite oxide particles may be mixed with a sulfur compound aqueous solution (e.g., in a step S20).

In some embodiments, the sulfur compound aqueous solution may include a sulfur compound powder dissolved in a solvent.

For example, the sulfur compound powder may be added into the solvent in an amount from 0.1 wt% to 3 wt%, preferably from 0.1 wt% to 2.5 wt% based on a total weight of the preliminary lithium-transition metal composite oxide particles. In the above content range, deterioration of capacity and life-span properties due to an excessive input of the sulfur compound may be prevented while sufficiently reacting a residual lithium and the sulfur compound.

Accordingly, sulfur atoms may not be diffused into the active material particles and a sulfur content may be increased on a particle surface. Thus, an electrochemical potential barrier at an interface between the cathode active material and the electrolyte may be reduced, so that an interfacial resistance between the cathode active material and the electrolyte may be reduced.

For example, the solvent may be used in an amount from 2 wt% to 20 wt% based on the total weight of the preliminary lithium-transition metal composite oxide particles, and preferably may be used in an amount from 5 wt% to 10 wt% based on the total weight of the preliminary lithium-transition metal composite oxide particles.

In the above range, the sulfur compound powder may be sufficiently dissolved, and a layer structure deformation of the primary particles due to an excessive solvent input may be prevented. Accordingly, the electrochemical potential barrier at the interface between the cathode active material particles and the electrolyte may be reduced while appropriately forming a coating layer including the lithium-sulfur-containing portion on the surface of the cathode active material. Thus, the interfacial resistance between the cathode active material and the electrolyte may be reduced to effectively improve lithium ion diffusion properties.

In some embodiments, the sulfur compound powder may be added to the solvent in an amount of 50 wt% or less based on the weight of the solvent to prepare the sulfur compound aqueous solution. In the above range, the sulfur compound powder may be sufficiently dissolved in the solvent while sufficiently reacting the residual lithium and the sulfur compound.

In some embodiments, the sulfur compound powder may include a sodium hydrogen sulfate (Na₂H₂(SO₄)₂) powder, a potassium hydrogen sulfate (KHSO₄) powder, ammonium sulfate ((NH₄)₂SO₄), etc. For example, the sulfur compound aqueous solution may include an aqueous solution of Na₂H₂(SO₄)₂, an aqueous solution of KHSO₄, an aqueous solution of (NH₄)₂SO₄, etc.

For example, the solvent may be de-ionized water (DIW).

In exemplary embodiments, the preliminary lithium-transition metal composite oxide particles and the sulfur compound aqueous solution may be mixed. Sulfur contained in the sulfur compound aqueous solution may react with the residual lithium present on the surface of the preliminary lithium-transition metal composite oxide particles to be converted into a lithium-sulfur-containing portion. Accordingly, lithium-transition metal composite oxide particles including primary particles and the lithium-sulfur-containing portion may be obtained.

In exemplary embodiments, impurities present on the surface of the preliminary lithium-transition metal composite oxide particles may be removed through the mixing process. For example, the lithium precursor (lithium salt) may be used in an excess amount to improve yield of lithium metal oxide particles or to stabilize a synthesis process. In this case, the lithium precursor including lithium hydroxide (LiOH) and lithium carbonate (Li₂CO₃) may remain on the surface of the preliminary lithium-transition metal composite oxide particles.

Further, when the lithium-transition metal composite oxide particles have a high Ni content, a calcination may be performed at a low temperature when manufacturing the cathode. In this case, the residual lithium content on the surface of the lithium-transition metal composite oxide particles may be increased.

When the residual lithium is removed by cleaning with water of an equivalent amount corresponding to the cathode active material (a washing treatment), an oxidation of the surface of the preliminary lithium-transition metal composite oxide particle and a side reaction with water may be caused to damage or collapse the layered structure of the primary particles.

Additionally, the layered structure may be transformed into a face centered cubic structure, a spinel structure and/or a rock salt structure instead of a hexagonal close-packed structure by water, and the lithium-nickel-based oxide may be hydrolyzed to generate nickel impurities such as NiO or Ni(OH)₂.

However, according to exemplary embodiments of the present invention, the mixing process may be performed using the sulfur compound aqueous solution (e.g., an initial wetting method) without washing with water, so that a passivation of the surface of the lithium-transition metal composite oxide particles by the sulfur-containing compound may be implemented while performing the mixing process. For example, the lithium-sulfur-containing portion in which lithium and sulfur are bonded may be formed between primary particles having the hexagonal close-packed structure.

The term "initial wetting method" used herein refers to, e.g., a method spraying 15 wt% or less of water or the sulfur compound aqueous solution based on the total weight of the metal composite oxide particles instead of washing and stirring with water of an amount substantially equal to or similar to the total weight of the lithium-transition metal composite oxide particles

In exemplary embodiments, the water washing treatment may not be performed, so that the lithium-transition metal composite oxide particles may not include primary particles having a facecentered cubic structure. Thus, the residual lithium may be effectively removed while preventing the oxidation and damages to the layered structure by water on the particle surface.

For example, when the sulfur compound powder is directly mixed with the lithium-transition metal composite oxide particles instead of the sulfur compound aqueous solution, a capillary force may not substantially act on the sulfur compound powder. Thus, the sulfur compound may not penetrate between the primary particles. As a result, most of the sulfur compound powder may react with the residual lithium on the surface of the secondary particle in which the primary particles are aggregated.

For example, the lithium-sulfur-containing portion may be formed as a coating of the secondary particle surface. In this case, the surface of the primary particles may not be sufficiently protected when being impregnated with the electrolyte, and the residual lithium may remain on the surface between the primary particles, thereby increasing the battery resistance. Accordingly, the capacity and power properties of the battery may be deteriorated.

However, according to exemplary embodiments of the present invention, the initial wetting method may be performed using the sulfur compound aqueous solution as described above. The sulfur compound aqueous solution may penetrate between the primary particles by the capillary force to form the lithium-sulfur-containing portion through a reaction with the residual lithium between the primary particles.

In some embodiments, a content of the sulfur compound in the sulfur compound aqueous solution may be in a range from 0.1 wt% to 3 wt% based on the total weight of the preliminary lithium-transition metal composite oxide particles. In the above content range, the lithium-sulfur-containing portion may be formed to have an appropriate lithium/sulfur content while removing or reducing the residual lithium. Thus, the capacity reduction of the lithium ion battery may be prevented, and the damage or collapse of the layered structure of the primary particles may be prevented.

After the mixing process, a cathode active material having a secondary particle structure in which a plurality of primary particles are combined and including the lithium-sulfur-containing portion formed between the primary particles may be obtained through a heat treatment (calcination) process (e.g., in a step S30).

For example, the preliminary lithium-transition metal composite oxide particles and the lithium-sulfur-containing portion, which have been subjected to the above-described mixing process, may be heat-treated using a kiln. Accordingly, the lithium-transition metal composite oxide particle having the secondary particle structure in which a plurality of the primary particles are combined, and including the lithium-sulfur-containing portion formed between the primary particles may be obtained.

The lithium-sulfur-containing portion may be formed in the form of coating on the surface of the secondary particle. The lithium-sulfur-containing portion may be permeated and formed between the primary particles within an inside of the secondary particles.

For example, the heat treatment may be performed at a temperature in a range from 200 °C to 500 °C under an oxygen atmosphere. In the above temperature range, the residual lithium on the surface of the preliminary lithium-transition metal composite oxide particle and the sulfur compound in the sulfur compound aqueous solution may be sufficiently combined to effectively form the lithium-sulfur-containing portion.

FIG. 2 is a schematic cross-sectional view illustrating a cathode complex in accordance with exemplary embodiments. For convenience of descriptions, the illustration of the primary particles included in a cathode active material 100 (the lithium-transition metal oxide particles) is omitted. The cathode complex may be used in a sulfide-based all-solid-state battery.

Referring to FIG. 2, the cathode complex for a sulfide-based all-solid-state battery may include the cathode active material for a sulfide-based all-solid-state battery or the lithium-transition metal oxide particles 100 having the above-described lithium-sulfur-containing portion 110, a solid electrolyte 200 and a conductive material 300.

For example, the lithium-transition metal oxide particles 100 having the lithium-sulfur-containing portion 110 formed thereon may be dry-mixed with the solid electrolyte 200 and the conductive material 300 and pressurized through an isotropic pressure pressing to form a cathode complex.

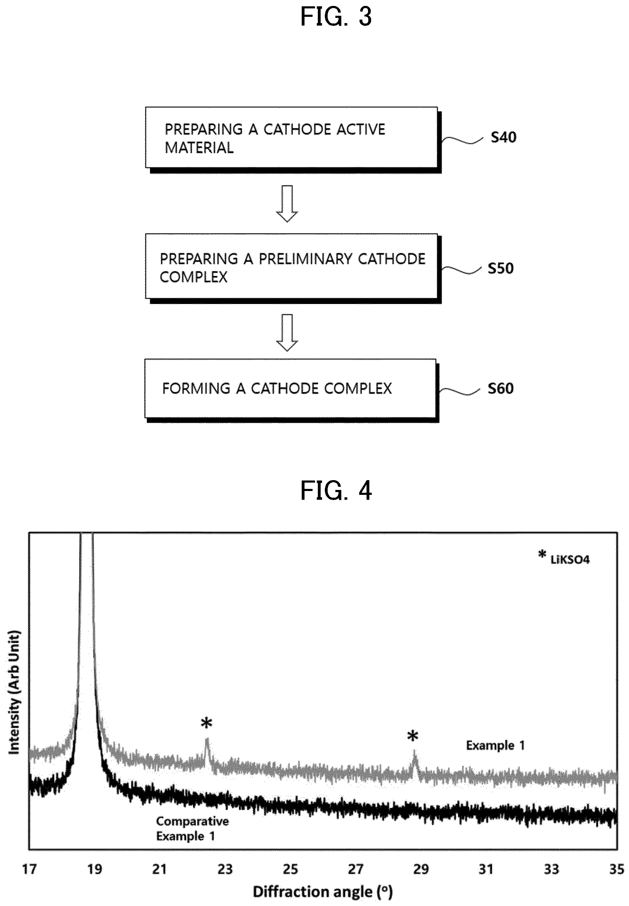

FIG. 3 is a process flow diagram for describing a method of fabricating a cathode complex in accordance with exemplary embodiments.

Referring to FIG. 3, in exemplary embodiments, the cathode active material for a sulfide-based all-solid-state battery as described with reference to FIG. 1 may be prepared (e.g., in a step S40).

The cathode active material for a sulfide-based all-solid-state battery, a sulfide-based solid electrolyte and a conductive material may be dry-mixed to prepare a preliminary cathode complex (e.g., in a step S50).

In some embodiments, a content of the cathode active material for a sulfide-based all-solid-state battery may be from 60 parts by weight to 99 parts by weight, a content of the solid electrolyte may be from 1 part by weight to 30 parts by weight, and a content of the conductive material may be from 1 part by weight to 10 parts by weight based on 100 parts by weight of the preliminary cathode complex.

The sulfide-based solid electrolyte may be the same as or different from a solid electrolyte included in a solid electrolyte layer. For example, the sulfide-based solid electrolyte may be represented by Chemical Formula 3.

[Chemical Formula 3] LiₑY_{f}P_{g}SₕZᵢ

In Chemical Formula 3, 0<e<12, 0≤f≤6, 0≤g≤6, 0≤h≤12, and 0≤i≤9. Y may include at least one element selected from B, Al, Ga, In, Si, Ge, Sn, Pb, As, Sb, Bi, Ti, V, Cr, Mn, Fe, Co, Ni, Cu, Y, Zr, Nb, Mo, Tc, Ru, Rh, Pd, Ag, Hf, Ta or W. Z may include one or more element selected from F, Cl, Br and I.

In some embodiments, the sulfide-based solid electrolyte may include an LPS-based solid electrolyte containing Li, P and S, an LGPS-based solid electrolyte containing Li, P, Ge and S, and/or an LSiPSCl-based solid electrolyte containing Li, Si, P, S and Cl.

The conductive material 300 may be included to promote an electron movement between the active material particles. For example, the conductive material 300 may include a carbon-based conductive material such as graphite, carbon black, graphene, carbon nanotubes, and/or a metal-based conductive material tin, tin oxide, titanium oxide, a perovskite material (LaSrCoO₃, LaSrMnO₃, etc.), etc.

In some embodiments, the preliminary cathode complex may further include a binder. A content of the binder may be in a range from 0.1 parts by weight to 3 parts by weight based on 100 parts by weight of the preliminary cathode complex.

For example, the binder may include vinylidene fluoride-hexafluoropropylene copolymer (PVDF-co-HFP), polyvinylidenefluoride (PVDF), polyacrylonitrile (polyacrylonitrile), polymethyl methacrylate, etc.

The mixing may be performed under a dry condition in which an organic solvent may not be used. For example, the preliminary cathode complex in which the cathode active material, the sulfide-based solid electrolyte and the conductive material may be uniformly mixed in a predetermined ratio may be obtained by using a dry high-speed mixer.

In the dry process, drying of the solvent may not be required, and harmful contaminants by the organic solvent may not be generated. Further, a pressing process for manufacturing the cathode complex may be easily performed.

A cathode complex may be formed by pressing the preliminary cathode complex (e.g., in a step S60).

In exemplary embodiments, the pressing may be performed by a flat plate pressing of a uniaxial press type or an isostatic pressing of a 3-axial press type.

In some embodiments, the pressing may include an isostatic pressing process, e.g., a hot pressing (e.g., warm isostatic press: WIP), a cold pressing (e.g., cold isostatic press: CIP), or a roll press process.

Preferably, the pressing may include a low-temperature pressing. For example, the preliminary cathode complex may be put into a packaging material and sealed, and then press-molded by the cold water isostatic pressing (CIP). In this case, a stress may act uniformly in substantially all directions when being compared to a case using the flat plate pressing, thereby suppressing a bending phenomenon of the cathode complex.

In an embodiment, the pressing may be performed at a pressure ranging from 200 MPa to 800 MPa for 10 seconds to 1 minute, preferably at a pressure ranging 400 MPa to 600 MPa for 10 seconds to 40 seconds. In the above range, the cathode complex having a high adhesion between the cathode active material particles and the solid electrolyte (e.g., pellets having a density of 75% or more) may be achieved.

In exemplary embodiments, an electrode cell may be defined by the cathode complex, an anode complex and a solid electrolyte, and a plurality of the electrode cells may be stacked to form an electrode assembly. For example, the electrode assembly may be formed by winding, lamination, folding, etc.

An anode may be used in the form of an anode active material or an anode complex formed by pressing the anode active material and a solid electrolyte. The pressing may be performed using the above-mentioned flat plate pressing or the isotropic pressing of the triaxial press type.

The anode active material may include a material capable of intercalating and deintercalating lithium ions. The anode active material may include, e.g., a carbon-based material such as a crystalline carbon, an amorphous carbon, a carbon composite material or a carbon fiber; a silicone-based material; a lithium alloy, etc.

The amorphous carbon may include, e.g., hard carbon, cokes, mesocarbon microbead (MCMB) calcined at 1500 °C or less, mesophase pitch-based carbon fiber (MPCF), etc. The crystalline carbon may include, e.g., natural graphite, graphitized cokes, graphitized MCMB, graphitized MPCF, or the like.

The lithium alloy may include an element such as aluminum, zinc, bismuth, cadmium, antimony, silicon, lead, tin, gallium or indium.

The cathode complex and the anode complex included in each electrode cell may include a cathode current collector and an anode current collector, respectively.

The cathode current collector may include, e.g., stainless steel, nickel, aluminum, titanium, copper or an alloy thereof, preferably aluminum or an aluminum alloy.

The anode current collector may include, e.g., gold, stainless steel, nickel, aluminum, titanium, copper or an alloy thereof, preferably copper or a copper alloy.

An electrode tab (a cathode tab and an anode tab) may protrude from the cathode current collector and the anode current collector, respectively, and may extend to one side of an outer case. The electrode tabs may be fused together with the one side of the outer case to form electrode leads (cathode and anode leads) extending or exposed to an outside of the outer case.

The electrode assembly may be accommodated in the outer case to define a lithium secondary battery. The lithium secondary battery may be fabricated, e.g., in a cylindrical shape using a can, a prismatic shape, a pouch type, a coin type, etc.

In some embodiments, a sulfide-based electrolyte may be used as the solid electrolyte. The sulfide-based electrolyte may be the same as or different from the sulfide-based solid electrolyte included in the above-described cathode complex. The sulfide-based electrolyte may preferably include an LPS-based solid electrolyte, an LGPS-based solid electrolyte or an LSiPSCl-based solid electrolyte.

For example, the solid electrolyte may include Li₂S-P₂S₅, Li₁₀GeP₂S₁₂, Li₁₀SnP₂S₁₂, Li_{9.54}Si_{1.74}P_{1.44}S1_{1.7}Cl_{0.3}, Li₁₀(Si_{0.5}Ge_{0.5})P₂S₁₂, Li₁₀(Ge_{0.5}Sn_{0.5})P₂S₁₂, Li₁₀(Si_{0.5}Sn_{0.5})P₂S₁₂, Li₁₀GeP₂S_{11.7}O_{0.3}, Li_{9.6}P₃S₁₂, Li₉P₃S₉O₃, Li_{10.35}Ge_{1.35}P_{1.65}S₁₂, Li_{10.35}Si_{1.35}P_{1.65}S₁₂, Li_{9.81}Sn_{0.8}P_{2.19}S₁₂, Li_{9.42}Si_{1.02}P_{2.1}S_{9.96}O_{2.04}, etc. These may be used alone or in a combination thereof.

According to the above-described exemplary embodiments, the cathode active material particles may include the lithium-sulfur-containing portion, and sulfur atoms may not be diffused into the cathode active material particles by doping or coating of the sulfur compound, so that a sulfur content may be increased on the surface of the particles. Accordingly, the cathode active material for a sulfide-based all-solid battery having a reduced interfacial resistance with the electrolyte and the cathode complex including the same may be provided.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

### Example 1

### Preparation of preliminary lithium-transition metal composite oxide particles (S10)

NiSO₄, CoSO₄ and MnSO₄ were mixed in a molar ratio of 0.88:0.09:0.03, respectively, in distilled water from which dissolved oxygen was removed by bubbling with N₂ for 24 hours. The solution was put into a reactor at 50 °C, and NaOH and NH₃H₂O were used as a precipitating agent and a chelating agent, respectively, to proceed with a co-precipitation reaction for 48 hours to obtain Ni_{0.88}Co_{0.09}Mn_{0.03}(OH)₂ as a transition metal precursor. The obtained precursor was dried at 80 °C for 12 hours and then re-dried at 110 °C for 12 hours.

Lithium hydroxide and the transition metal precursor were added in a molar ratio of 1.01:1 to 1.025:1 in a dry high-speed mixer and uniformly mixed for 5 minutes. The mixture was placed in a kiln and heated to 730 °C to 750 °C at a heating rate of 2°C/min, and maintained at 730°C to 750°C for 10 hours. Oxygen was passed continuously at a flow rate of 10 mL/min during the temperature heating and maintenance interval. After the calcination, natural cooling was performed to room temperature, and then crushing and classification were performed to obtain preliminary lithium-transition metal composite oxide particles of a cathode active material LiNi_{0.88}Co_{0.1}Mn_{0.1}O₂.

### Preparation and mixing of a sulfur compound aqueous solution (S20) and heat treatment (S30)

Potassium hydrogen sulfate (KHSO₄) in an amount of 0.8 wt% based on a total weight of the preliminary lithium-transition metal composite oxide particles was put in 5 wt% of de-ionized water (DIW) based on the total weight of the obtained preliminary lithium-transition metal composite oxide particles, and stirred. The potassium hydrogen sulfate powder was sufficiently dissolved in deionized water to prepare a sulfur compound aqueous solution.

The prepared sulfur compound aqueous solution was added to the preliminary lithium-transition metal composite oxide particles and mixed.

The obtained mixture was placed in a kiln and vacuum dried at 100 °C to 150 °C, and then heated to a temperature between 200 °C and 500 °C at a heating rate of 2 °C/min while supplying oxygen at a flow rate of 10 mL/min, and maintained for 10 hours at the heated temperature. After the calcination, the cathode active material of first lithium-transition metal composite oxide particles having a secondary particle structure was obtained by classifying with 325 mesh.

### Fabrication of an all-solid-state secondary battery

A secondary battery was manufactured using the cathode active material including the first lithium-transition metal composite oxide particles having the above-described secondary particle structure. Specifically, the cathode active material, an all-solid electrolyte (80Li₂S-20P₂S₅), and a conductive material (Denka Black) were mixed in a mass ratio of 70:28:2, respectively, and a cold water isostatic pressing (CIP) was performed at a pressure of 450 MPa for 1 minute to obtain a cathode complex in the form of a film. The cathode complex prepared as described above was notched in the form of a film having a diameter of Φ16. The weight of the cathode complex after the notching was measured to be 30 mg.

200 mg of all-solid electrolyte (80Li₂S-20P₂S₅) was put into a SUS circular mold having the same diameter and uniaxially press-molded by 2 Metric Ton to prepare a solid electrolyte pellet. The cathode complex film was disposed on one side of the solid electrolyte pellet and a Li-In foil was disposed on the other side of the solid electrolyte pellet, and then sequentially pelletized. Accordingly, an all-solid-state battery having a three-layered structure of the cathode complex powder-solid electrolyte-Li/In anode was prepared.

To fabricate a cathode current collector, CNTs were dispersed and then networked to prepare a film (sheet) having an electrical conductivity. The CNT film was placed on the cathode composite pellet, and the prepared cell structure was assembled in a coin cell casing having a diameter of 20 mm and a height of 3.2 mm

### Example 2

A cathode active material and an all-solid-state secondary battery were obtained by the same method as that in Example 1, except that 1.5 wt% of sodium hydrogen sulfate (Na₂H₂(SO₄)₂) powder was added instead of potassium hydrogen sulfate (KHSO₄) powder.

### Example 3

A cathode active material and an all-solid secondary battery were obtained by the same method as that in Example 1, except that 1.24 wt% of ammonium sulfate ((NH₄)₂SO₄) powder was added instead of potassium hydrogen sulfate (KHSO₄) powder.

### Example 4

A cathode active material and an all-solid-state secondary battery were obtained by the same method as that in Example 1, except that potassium hydrogen sulfate (KHSO₄) powder was added in an amount of 0.1 wt% based on the total weight of the preliminary lithium-transition metal composite oxide particles.

### Example 5

A cathode active material and an all-solid-state secondary battery were obtained by the same method as that in Example 1, except that potassium hydrogen sulfate (KHSO₄) powder was added in an amount of 0.6 wt% based on the total weight of the preliminary lithium-transition metal composite oxide particles.

### Example 6

A cathode active material and an all-solid-state secondary battery were obtained by the same method as that in Example 1, except that potassium hydrogen sulfate (KHSO₄) powder was added in an amount of 1.2 wt% based on the total weight of the preliminary lithium-transition metal composite oxide particles.

### Example 7

A cathode active material and an all-solid-state secondary battery were obtained by the same method as that in Example 1, except that potassium hydrogen sulfate (KHSO₄) powder was added in an amount of 1.8 wt% based on the total weight of the preliminary lithium-transition metal composite oxide particles.

### Example 8

A cathode active material and an all-solid-state secondary battery were obtained by the same method as that in Example 1, except that potassium hydrogen sulfate (KHSO₄) powder was added in an amount of 2.4 wt% based on the total weight of the preliminary lithium-transition metal composite oxide particles.

### Comparative Example 1

A cathode active material and an all-solid-state secondary battery were obtained by the same method as that in Example 1, except that mixing of the preliminary lithium-transition metal composite oxide particles and the sulfur compound aqueous solution (S20) and the heat treatment (S30) were not performed.

### Comparative Example 2

Instead of mixing of the preliminary lithium-transition metal composite oxide particles and the sulfur compound aqueous solution (S20) in Example 1, the preliminary lithium-transition metal composite oxide particles were added to a water washing solution prepared by adding the same amount of potassium hydrogen sulfate (KHSO₄) powder as that in Example 1 to pure water in an amount of 100 wt% based on the total weight of the preliminary lithium-transition metal composite oxide particles, and stirring for 10 minutes. Further, the cathode active material was prepared by drying at 130 °C to 170 °C for 12 hours under vacuum after filtering. An all-solid-state secondary battery was obtained by the same method as that in Example 1 except for the above-described processes.

### Comparative Example 3

Instead of mixing of the preliminary lithium-transition metal composite oxide particles and the sulfur compound aqueous solution (S20), the preliminary lithium-transition metal composite oxide particles and potassium hydrogen sulfate (KHSO₄) powder were added by the same weights as those in Example 1, and the mixture was dry-mixed using a mixer. An all-solid-state secondary battery was obtained after the heat treatment (S30) by the same method as that in Example 1 except for the above-described process.

### Experimental Example 1

### (1) XRD (X-ray diffusion) analysis

XRD peak intensities of the lithium-transition metal composite oxide particles obtained according to Example 1 and Comparative Example 1 were analyzed through an XRD analysis.

For the XRD measurement, X-rays were accelerated under conditions of a voltage of 45 kV and a current of 40 mA using Cu, and a diffraction angle 2θ was set in a range from 10° to 120° and scanned in a reflection mode.

### (2) SEM (Scanning Electron Microscope) and EDS (Energy Dispersive Spectrometer) analysis

Structures of compounds present at a primary particle region and the lithium-sulfur-containing portion (a region between the primary particles) were analyzed through an SEM image and an EDS analysis of a cross-section of the lithium-transition metal composite oxide particle obtained according to Example 1 and Comparative Example 1 as described above.

FIG. 4 is a graph showing results of XRD analysis of lithium-transition metal composite oxide particles according to Example 1 and Comparative Example 1. Specifically, the first lithium-transition metal composite oxide particle obtained according to Example 1 of FIG. 4 had XRD peaks at a diffraction angle in a range from 20° to 30° as LiKSO₄ was formed as a lithium-sulfur-containing portion (the region between the primary particles).

In the lithium-transition metal composite oxide particles according to Comparative Example 1, an XRD peak was not detected. Each compound has a unique XRD pattern, and thus it can be confirmed that Example 1 in which the lithium-sulfur containing portion was formed provided a different crystal structure from that in the lithium-transition metal composite oxide particles of Comparative Example 1 in which the lithium-sulfur containing portion was not formed.

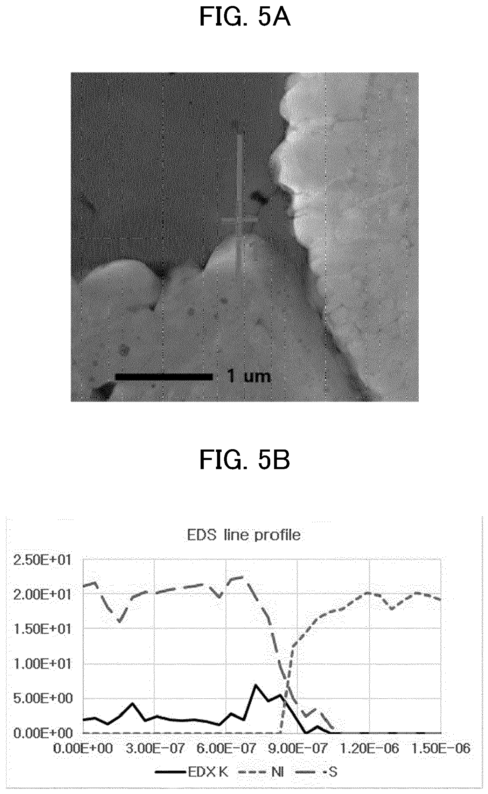

FIG. 5A is a partial SEM image of primary particles included in the first lithium-transition metal composite oxide particle according to Example 1. FIG. 5B is an EDS line profile showing the distribution of K, S, and Ni elements in a surface region (boundary) of the primary particles shown in FIG. 5A.

In FIG. 5A, the first lithium-transition metal composite oxide particles are surrounded by an all-solid electrolyte. It can be predicted that a point at which the S and Ni content distributions change rapidly is a boundary between the cathode active material and the solid electrolyte.

The lithium-sulfur-containing portion (LiKSO₄) was formed on the surface of the first lithium-transition metal composite oxide primary particle, and thus it is predicted that a concentration gradient of S was formed.

### Experimental Example 2

### (3) Measurement of sulfur content

0.02g to 0.03 g of the lithium-transition metal composite oxide particles obtained according to the above-described Examples and Comparative Examples were burned at a temperature of 2,600 °C to 2,700 °C, and a sulfur oxide-based inorganic compound gas (e.g., sulfuric acid gas) was analyzed with a CS analyzer to calculate a sulfur content in the lithium-transition metal composite oxide particles by ppm unit.

### (4) Measurement of residual lithium (Li₂CO₃, LiOH) content

1.5 g of the lithium-transition metal composite oxide particles of Examples and Comparative Examples were put into a 250 mL flask, 100 g of deionized water was added, a magnetic bar was put, and the mixture was stirred at a speed of 60 rpm for 10 minutes. Thereafter, 100 g was aliquoted after filtering using a reduced pressure flask. The aliquoted solution was placed in an automatic titrator container and automatically titrated with 0.1N HCl by a Wader method to measure contents of Li₂CO₃ and LiOH in the solution.

### (5) Calculation of average value of sulfur signal

The lithium-transition metal composite oxide particles obtained according to the above-described Examples and Comparative Examples were subjected to an STEM-EDS to determine a sulfur signal value of a solid electrolyte region and a region between the primary particles (e.g., the lithium-sulfur-containing portion) continuously by a line scan. Thereafter, the sulfur signal value was averaged for each region to calculate the average value of the sulfur signal in the solid electrolyte and the lithium-sulfur-containing portion.

Table 1 shows the measurement results according to Experimental Example 2 of Examples and Comparative Examples.

**[Table 1]**

| No. | sulfur compound powder | lithium-sulfur containing portion | amount of sulfur compound powder (wt%) | sulfur content of lithium-transition metal composite oxide particle (ppm) | residual lithium (Li₂CO₃ + LiOH) (ppm) | average value of sulfur signal of lithium-sulfur-containing portion relative to solid electrolyte (counts) |
|---|---|---|---|---|---|---|
| Example 1 | KHSO₄ | LiKSO₄ | 0.8 | 3400 | 4200 | 0.41 |
| Example 2 | Na₂H₂(SO₄)₂ | LiNaSO₄ | 1.5 | 3800 | 4320 | 0.48 |
| Example 3 | (NH₄)₂SO₄ | Li₂SO₄ | 1.24 | 3500 | 3900 | 0.44 |
| Comparative Example 1 | - | | - | 900 | 7810 | - |
| Comparative Example 2 | KHSO₄ | LiKSO₄ | 0.8 | 600 | 3500 | 0.07 |
| Comparative Example 3 | KHSO₄ | LiKSO₄ | 0.8 | 3600 | 5350 | 0.35 |

Referring to Table 1, the sulfur contents of the first lithium-transition metal composite oxide particles according to Examples 1 to 3 were generally higher than those from Comparative Examples. Further, a ratio of the average value of the sulfur signal in the region between the primary particles relative to the average value of the sulfur signal of the solid electrolyte (sulfur signal ratio) was 0.4 to 0.5 in Examples, and the sulfur content at the interface between the solid electrolyte and the primary particles was measured to be relatively high.

Therefore, it can be predicted that sulfur atoms were present at the particle surface while the sulfur atoms was prevented from being diffused into the particle. Accordingly, the electrochemical performance may be improved by reducing the chemical potential barrier at the interface with the solid electrolyte by the sulfur-containing portion present on the surface.

In Examples where the initial wetting method was performed by mixing the sulfur compound aqueous solution, the content of lithium remaining on the surface of the lithium-transition metal composite oxide particles was significantly reduced compared to that from Comparative Examples. Thus, it is confirmed that the residual lithium reduction effect similar to that by the water washing process was obtained even in the non-water washing condition.

In Comparative Example 1 where the treatment with the sulfur compound aqueous solution was not performed and Comparative Example 2 where the water washing was performed, the lithium-sulfur containing portion was not formed or insignificantly formed in the lithium-transition metal composite oxide particles, thereby reducing the sulfur content and the average value of the sulfur signal in the cathode active material. In Comparative Example 3 where the dry coating was performed, the sulfur content of the lithium-transition metal composite oxide particle was relatively high, but the average value of the sulfur signal of the lithium-sulfur-containing portion relative to that from the solid electrolyte was low compared to those in Examples. Thus, it is predicted that sulfur atoms were diffused into the particles by the dry coating and the sulfur content was reduced on the surface of the primary particles compared to the case performing the initial wetting method.

### Experimental Example 3

### (6) Lithium ion conductivity at 25 °C

Cathode active materials of Examples 4 to 8 were prepared by the same method as that in Example 1, except that sulfur compound aqueous solutions were prepared by changing input amounts of the sulfur compound powder (potassium hydrogen sulfate) the same as that used in Example 1. The cathode active material and a lithium metal (anode) were assembled into a coin cell together with a solid electrolyte.

A resistance was measured using an electrochemical impedance spectroscopy measuring instrument (EIS, VMP-300 Potentiostat) at 25 °C with an amplitude of 10 mV and under a condition of 1 to 10 MHz, and then a lithium ion conductivity was measured.

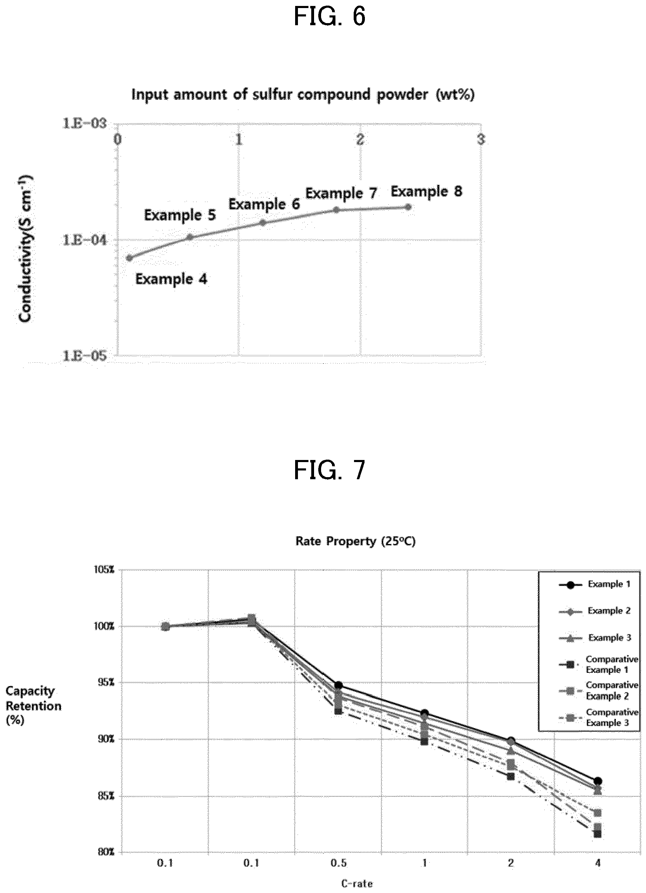

The results are shown in Table 2 and FIG. 6.

**[Table 2]**

| | Input amount of sulfur compound powder (wt%) | lithium ion conductivity (25 °C, 10⁻⁴ S/cm) |
|---|---|---|
| Example 4 | 0.1 | 0.70 |
| Example 5 | 0.6 | 1.06 |
| Example 6 | 1.2 | 1.41 |
| Example 7 | 1.8 | 1.80 |
| Example 8 | 2.4 | 1.92 |

### (7) Evaluation of rate property at 25 °C

Rate properties based on a C-rate (charge/discharge 0.1C twice, charge/discharge 0.5C once, thereafter charge 0.5C and discharge 1C, 2C and 4C each once under the same condition) under the conditions of 25 °C, cut-off 4.3V charge and 2.5V discharge were measured using all-solid-state batteries according to Examples and Comparative Examples

A discharge amount at 4C was compared with a discharge amount after a standard 0.5C charge/discharge to evaluate a capacity recovery.

The results are shown in Table 3 and FIG. 7.

**[Table 3]**

| | lithium ion conductivity (25 °C, 10⁻⁴ S/cm) | 25 °C rate property 4C /0.5C recovery ratio (%) |
|---|---|---|
| Example 1 | 1.41 | 87 |
| Example 2 | 1.22 | 86 |
| Example 3 | 1.20 | 86 |
| Comparative Example 1 | 0.65 | 82 |
| Comparative Example 2 | 0.92 | 82 |
| Comparative Example 3 | 0.84 | 84 |

Referring to Tables 2 and 3, Examples provided greater lithium ion conductivity at 25 °C than Comparative Examples. Additionally, the amount of the sulfur compound powder contained in the sulfur compound aqueous solution was adjusted in a range from 0.1 wt% to 3 wt% based on the total weight of the preliminary lithium-transition metal composite oxide particles, and the lithium ion conductivity was improved.

For example, the electrochemical potential barrier may be reduced at the interface between the primary particle of the cathode active material and the electrolyte, so that the interfacial resistance may be reduced and lithium ion diffusion may be effectively improved.

In Examples, capacity recovery ratios of 86% or more were obtained.

Referring to FIG. 7, in Examples, the capacity recovery ratio was enhanced in the entire C-rate range compared to those from Comparative Examples.

In Comparative Examples, the lithium-sulfur-containing portion was not formed on the cathode active material particles, or the sulfur compound in the sulfur compound aqueous solution was washed and removed without remaining on the cathode active material particles during the water washing process. Accordingly, the surface sulfur content of the cathode active material particles was reduced. As a result, the electrochemical potential barrier was increased at the interface between the primary particles of the cathode active material and the electrolyte, and the ionic conductivity and the rate property of the battery were deteriorated.

## Claims

1. A cathode active material for a sulfide-based all-solid-state battery, comprising a first lithium-transition metal composite oxide particle having a secondary particle structure that comprises a plurality of primary particles therein,
wherein the first lithium-transition metal composite oxide particle comprises a lithium-sulfur-containing portion formed between the primary particles.

2. The cathode active material for a sulfide-based all-solid-state battery according to claim 1, wherein the lithium-sulfur-containing portion is also formed on an outer surface portion of the secondary particle structure of the first lithium-transition metal composite oxide particle.

3. The cathode active material for a sulfide-based all-solid-state battery according to any one of claims 1 and 2, wherein the primary particles are represented by Chemical Formula 1:
[Chemical Formula 1] LiₐNi_{b}M_{1-b}O₂
wherein, in Chemical Formula 1, 0.95 ≤ a ≤ 1.08, 0.5 ≤ b ≤ 1, and M includes at least one element selected from Na, Mg, Ca, Y, Ti, Zr, Hf, V, Nb, Ta, Cr, Mo, W, Mn, Co , Fe, Cu, Ag, Zn, B, Al, Ga, C, Si, Sn, Ba and Zr.

4. The cathode active material for a sulfide-based all-solid-state battery according to any one of claims 1 to 3, wherein the lithium-sulfur-containing portion comprises a lithium-sulfur compound represented by Chemical Formula 2:
[Chemical Formula 2] Li_{c}X_{d}SO₄
wherein, in Chemical Formula 2, 0.95 ≤ c≤2, 0≤d≤1, and X includes Na or K.

5. The cathode active material for a sulfide-based all-solid-state battery according to any one of claims 1 to 4, further comprising a second lithium-transition metal composite oxide particle having a single-particle structure.

6. The cathode active material for a sulfide-based all-solid-state battery according to claim 5, wherein the lithium-sulfur-containing portion is also formed on a surface of the second lithium-transition metal composite oxide particle.

7. The cathode active material for a sulfide-based all-solid-state battery according to any one of claims 1 to 6, wherein a peak of the lithium-sulfur-containing portion of the first lithium-transition metal composite oxide particle measured by an X-ray diffraction (XRD) analysis is detected at a diffraction angle in a range from 20° to 30°.

8. The cathode active material for a sulfide-based all-solid-state battery according to any one of claims 1 to 7, wherein a sulfur content of the first lithium-transition metal composite oxide particle measured by a CS (carbon-sulfur) analyzer is in a range from 3,000 ppm to 4,000 ppm relative to a total weight of the first lithium-transition metal composite oxide particle.

9. The cathode active material for a sulfide-based all-solid-state battery according to any one of claims 1 to 8, wherein a total content of lithium carbonate (Li₂CO₃) and lithium hydroxide (LiOH) remaining on a surface of the first lithium-transition metal composite oxide particle is 5,000 ppm or less.

10. A method of fabricating a cathode active material for a sulfide-based all-solid-state battery, comprising:
preparing preliminary lithium-transition metal composite oxide particles by reacting a transition metal precursor and a lithium precursor;
mixing the preliminary lithium-transition metal composite oxide particles with a sulfur compound aqueous solution; and
heat-treating the mixed preliminary lithium-transition metal composite oxide particles and the sulfur compound aqueous solution to form lithium-transition metal composite oxide particles that comprises a lithium-sulfur-containing portion,
wherein the lithium-transition metal composite oxide particles have a secondary particle structure that comprises a plurality of primary particles combined therein, and the lithium-sulfur-containing portion is formed between the primary particles.

11. The method according to claim 10, wherein the sulfur compound aqueous solution comprises a solvent and a sulfur compound powder mixed in the solvent, and an amount of the sulfur compound powder is in a range from 0.1 wt% to 3 wt% based on a total weight of the preliminary lithium-transition metal composite oxide particles.

12. The method according to claim 11, wherein an amount of the solvent is in a range from 2 wt% to 20 wt% based on the total weight of the preliminary lithium- transition metal composite oxide particles.

13. The method according to claim 12, wherein the sulfur compound powder comprises at least one selected from sodium hydrogen sulfate, potassium hydrogen sulfate and ammonium sulfate.

14. The method according to any one of claims 10 to 13, wherein the heat-treating is performed at a temperature ranging from 200 °C to 500 °C under an oxygen atmosphere.

15. The method according to any one of claims 10 to 14, wherein the preliminary lithium-transition metal composite oxide particles are mixed with the sulfur compound aqueous solution without washing with water.
